# EUROPÄISCHE PATENTSCHRIFT

(11) **EP 2 091 047 B1**
(45) Veröffentlichungstag und Bekanntmachung des Hinweises auf die Patenterteilung: **14.11.2012**
(21) Anmeldenummer: 08002732.9
(22) Anmeldetag: 14.02.2008
(51) Int. Cl.: G06F 17/22, G11B 27/11, G06F 17/30, G06F 17/24, G06F 19/00

(54) **Verfahren zur Bearbeitung eines Videos**
Method for processing a video
Procédé destiné au traitement d'une vidéo

(43) Veröffentlichungstag der Anmeldung: 19.08.2009
(73) Patentinhaber: ORT Medienverbund GmbH, 47807 Krefeld (DE)
(72) Erfinder: Meuer, Kristian, 47228 Duisburg (DE)
(74) Vertreter: Paul, Dieter-Alfred

(56) Entgegenhaltungen:
- EP-A- 0 959 421
- WO-A-00/16541
- WO-A-03/019418
- WO-A-2006/131277
- US-A1- 2001 028 364
- US-A1- 2002 059 342
- US-A1- 2004 122 898
- US-A1- 2004 205 653
- CHING-YUNG LIN, BELLE L. TSENG, JOHN R. SMITH, IBM T. J. WATSON RESEARCH CENTER: "Video Collaborative Annotation Forum: Establishing Ground-Truth Labels on Large Multimedia Datasets" TRECVID WORKSHOP, 18. November 2003 (2003-11-18), XP002483852
- BELLE L. TSENG, CHING-YUNG LIN, AND JOHN R. SMITH, IBM T. J. WATSON RESEARCH CENTER: "Video Summarization and Personalization for Pervasive Mobile Devices" SPIE ELECTRONIC IMAGING 2002 - STORAGE AND RETRIEVAL FOR MEDIA DATABASES, Januar 2002 (2002-01), XP002483853 San Jose

## Beschreibung

Die vorliegende Erfindung betrifft ein Verfahren zur Bearbeitung eines Videos, insbesondere eines Videos als Werbemittel, bei dem ein Videoentwurf elektronisch erzeugt wird und dem Videoentwurf elektronisch Kommentare beispielsweise als Text, Sprache, Bild oder Video zu einzelnen Bildern oder Bildsequenzen oder als bewegte oder statische Markierungen in Bildern oder Bildsequenzen für eine Bearbeitung des Videoentwurfs hinzugefügt werden.

Ein derartiges Verfahren ist z.B. aus der DE 10 2005 025 903 A1 bekannt. Bei diesem Verfahren werden zu einem Video Kommentarschichten erzeugt, die über das Video gelegt werden. Innerhalb jeder Kommentarschicht werden dem Video verschiedenartige Informationen hinzugefügt. So können Textkommentare zu einzelnen Bildern oder Bildsequenzen erzeugt werden, oder einzelne Bildinhalte des Videos können auf einzelnen Bildern oder in Bildsequenzen markiert werden. Dadurch kann die Aufmerksamkeit eines Betrachters auf bestimmte Segmente des Videos fokussiert werden, und gleichzeitig können Zusatzinformationen zu den Bildern oder Sequenzen bereitgestellt werden. Auch können parallele Kommentare von verschiedenen Nutzern erzeugt werden und in verschiedene Kommentarschichten abgelegt werden.

Das Video wie auch die Kommentarschichten werden auf einem Archivierungssystem in Form einer Datenbank gespeichert, über das ein Zugriff auf die Daten möglich ist. So wird durch das Archivierungssystem das zu bearbeitende Video bereitgestellt, um eine Kommentierung durchzuführen. Auch für die Betrachtung eines Videos zusammen mit einer oder mehreren Kommentarschichten kann das Archivierungssystem das Video mit den ausgewählten Kommentarschichten liefern.

Nachteilig wird an diesem bekannten Verfahren angesehen, dass die Kommentarschichten als Einheit existieren und Einzelkommentare aus einer Kommentarschicht nicht herausgegriffen werden können. Damit ist es nicht möglich vorhandene Einzelkommentare auszuwählen und zu einer Gesamtkommentierung zusammenzufügen. Damit ist diese Art der Kommentierung für kreative Prozesse ungeeignet, bei denen möglichst verschiedene Kommentare miteinander kombiniert werden müssen, und kann lediglich zur Archivierung benutzt werden.

Aufgabe der vorliegenden Erfindung ist es daher, ein Verfahren für die Bearbeitung eines Videoentwurfs bereitzustellen, bei dem das Video mit einer Kommentierung für die weitere Bearbeitung versehen wird.

Verfahren zum Hinzufügen von Annotationen, Kommentaren und medialen Inhalten zu einem Multimediadokument durch mehrere Benutzer sind in US 2002/0059342 A1 sowie in dem Artikel "Video Collaborative Annotation Forum: Establishing Ground-Truth Labels on Large Multimedia Datasets" von Ching-Yung Lin, Belle L. Tseng und John R. Smith offenbart. Der Artikel "Video Summarization and Personalization for Pervasive Mobile Devices" von Belle L. Tseng, Ching-Yung Lin und John R. Smith zeigt ein Verfahren zur semantischen Annotation von Videosequenzen.

Diese Aufgabe ist erfindungsgemäß dadurch gelöst, dass in einer Datenbank ein Projekt erzeugt wird, der Videoentwurf dem Projekt zugeordnet wird, dem Videoentwurf einzelne Kommentare hinzugefügt und die Kommentare in der Datenbank gespeichert werden, einzelne Kommentare aus der Gesamtheit der Kommentare zu einer finalen Kommentierung ausgewählt und bearbeitet werden, und der Videoentwurf mit der finalen Kommentierung zu dem Video fertiggestellt wird.

Grundgedanke der vorliegenden Erfindung ist es, sowohl den zu bearbeitenden Videoentwurf wie auch die einzelnen Kommentare in einer Datenbank abzulegen und über die Auswahl von einzelnen Kommentaren aus der Gesamtheit aller Kommentare eine Kommentierung zu erzeugen, mit welcher der Videoentwurf zu dem Video fertiggestellt werden kann.

Dazu wird zunächst in der Datenbank ein Projekt erzeugt, dem ein Videoentwurf zugeordnet wird. Ein Benutzer kann beim Betrachten des Videoentwurfs entscheiden, wie und in welcher Form er den Videoentwurf kommentieren möchte. Die Kommentare können sehr unterschiedlicher Natur sein und Text, Sprache, Bilder oder separate Videos, die zu einzelnen Bildern oder Bildsequenzen Informationen, Korrekturen, Ergänzungen oder Anregungen liefern, umfassen. Auch innerhalb des Videoentwurfs selber können bewegte oder statische Markierungen wie vordefinierte Kreise, Pfeile oder ähnliches sowie individuell definierte Elemente in einzelnen Bildern oder Bildsequenzen für eine Bearbeitung des Videoentwurfs hinzugefügt werden. Die verschiedenen Kommentarmöglichkeiten können zusätzlich beliebig miteinander kombiniert werden. Beispielsweise kann eine Markierung im Bild zusätzlich mit einem Text erläutert werden.

Jeder erstellte Kommentar wird separat in der Datenbank gespeichert. Somit ist über die Datenbank nicht nur ein Zugriff auf den Videoentwurf selber, sondern auch auf die einzelnen Kommentare zu diesem Entwurf möglich.

Sobald alle Kommentare in die Datenbank eingepflegt sind, können die Kommentare einzeln analysiert werden. Dazu werden sie im Zusammenhang mit dem Videoentwurf betrachtet, und einzelne Kommentare werden für die finale Kommentierung ausgewählt. Gegebenenfalls kann an dieser Stelle auch noch eine weitere Bearbeitung der Kommentare erfolgen. Auf der Basis dieser finalen Kommentierung mit den ausgewählten einzelnen Kommentaren wird dann der Videoentwurf gemäß dieser Kommentierung überarbeitet.

Durch die Speicherung der individuellen Kommentare in der Datenbank ermöglicht das erfindungsgemäße Verfahren einen besonders flexiblen Zugriff auf die Kommentare. Da die Kommentare individuell gespeichert sind, müssen sie nicht in ihrer Gesamtheit betrachtet werden und wird die Auswahl einzelner Kommentare zu der finalen Kommentierung überhaupt erst ermöglicht. In der Datenbank werden dem Videoentwurf die Kommentare eindeutig zugeordnet, so dass der Videoentwurf selber nicht verändert wird. Die Kommentierung erfolgt durch das Hinzufügen von Informationen, die unabhängig von dem Videoentwurf gespeichert sind, womit alle Schritte bei der Bearbeitung transparent und nachvollziehbar bleiben.

Dabei können die Kommentare unmittelbar nach ihrer Erstellung in der Datenbank gespeichert werden. Durch das sofortige Speichern können die Kommentare nicht verloren gehen und stehen auch für den sofortigen Zugriff in der Datenbank zur Verfügung.

Zusätzlich können in dem Projekt verschiedene Versionen eines Videoentwurfs gespeichert werden, und jede Version eines videoentwurfs kann separat kommentiert werden. Da in der Praxis nicht davon auszugehen ist, dass ein erster Entwurf nach einer Bearbeitung alle Anforderungen erfüllt, kann ein aus einem Videoentwurf hergestelltes Video wieder als zu bearbeitender Videoentwurf in der Datenbank gespeichert werden. Es erfolgt eine Versionierung der verschiedenen Videoentwürfe, um diese unterscheiden zu können. Da die verschiedenen Videoentwürfe unter Umständen nur geringe oder gar keine Gemeinsamkeiten haben, ist es auch notwendig, dass die Kommentare individuell zu einem Videoentwurf gespeichert werden.

Dabei können verschiedene Versionen zusammengefasst und Arbeitsphasen zugeordnet werden. Hierzu wird jedem Projekt ein Projektstatus zugeordnet und in der Datenbank gespeichert, wobei der Projektstatus die jeweilige Arbeitsphase abbildet. Damit kann einem Entwicklungsprozess von z.B. einem Grobentwurf über einen Feinentwurf bis hin zu einem Endentwurf Rechnung getragen und in dem Projekt abgebildet werden. Entsprechend können auch die Möglichkeiten zur Kommentierung angepasst werden, da ein Endentwurf weniger Kommentare erfordert als eine früher Entwurf.

Auch kann jeder Videoentwurf in Kommentierungsphasen kommentiert werden. Dann wird jedem Videoentwurf ein Kommentierungsstatus zugeordnet und in der Datenbank gespeichert, wobei der Kommentierungsstatus die jeweilige Kommentierungsphase abbildet. Dadurch ist es möglich, die einzelnen Phasen der Bearbeitung strikt zu trennen, so dass beispielsweise die Konsolidierung erst nach dem expliziten Abschluss der Kommentierung durchgeführt werden kann. Auch die Konsolidierung ist eine Kommentierungsphase, genauso wie die Übergabe des Videoentwurfs mit den finalen Kommentaren zur Fertigstellung des Videos.

Des weiteren kann eine Mehrzahl von Personen individuelle Kommentare in den Videoentwurf einfügen. Damit können verschiedene Personen entsprechend ihrer Qualifikation ihre Hinweise für die Überarbeitung eines Videoentwurfs als Kommentar in die Datenbank einfügen. Vorteilhafterweise wird dabei auch eine Information über den Nutzer in der Datenbank gespeichert, so dass die Kommentare auch entsprechend zuzuordnen sind.

Jeder einzelnen Person kann wenigstens eine Funktion für die Kommentierung des Videoentwurfs zugeordnet sein, wobei einer Funktion die finale Kommentierung zugeordnet ist. Die verschiedenen Funktionen sind notwendig, damit nur gezielt Personen Entwürfe in der Datenbank anlegen, oder die finale Bearbeitung durchführen können oder z.B. den Projektstatus verändern. Auch ist insbesondere die Funktion eines Projektleiters notwendig, der das Projekt initiiert und die einzelnen Funktionen zu den Personen zuordnen kann. Die Funktionen können auch anhand besonderer Fähigkeiten der Person verteilt werden, so dass einige Personen eine inhaltliche Kommentierung durchführen, während Andere zum Beispiel technische Aspekte des Videoentwurfs kommentieren.

Den verschiedenen Funktionen können unterschiedliche Bearbeitungsrechte bei der Kommentierung zugeordnet werden. Dadurch wird es möglich, einer Mehrzahl von Personen das Betrachten eines Videoentwurfs zu ermöglichen, während nur ein geringer Teil der Personen zur Konsolidierung beiträgt. Auch kann es der Mehrheit der Personen nicht gestattet werden, die Kommentare der anderen Personen einzusehen, beispielsweise um eine Beeinflussung durch deren Kommentare zu verhindern. Andere Personen können eine Kommentierung der vorhandenen Kommentare als neue Kommentare zu dem Videoentwurf hinzufügen, wenn dies durch ihre Funktion erlaubt ist.

Insbesondere kann die Funktion für ein Projekt, eine Arbeitsphase und/oder für eine Version individuell vergeben werden. Damit kann eine Person in einem Projekt eine andere Funktion übernehmen als in einem anderen. In einem Projekt kann dieselbe Person als Projektleiter ein Projekt initiieren und in einem anderen Projekt als Kommentator einen Videoentwurf kommentieren, wobei die Person dann auch nur die Rechte der Funktion als Kommentator innehat. Andererseits kann es auch in verschiedenen Arbeitsphasen sinnvoll sein, dass z.B. bei einem ersten Entwurf nur wenige Personen Zugriff auf den Videoentwurf haben, um den Entwurf geheim zu halten. Bei einem anderen Anlass sollen besonders viele Personen einen ersten Entwurf kommentieren, um ein möglichst viele Kommentare zu erhalten. Versionsbezogen soll bei einer ersten Version von nicht videotechnisch versierten Personen zunächst die Idee beurteilt werden, wohingegen bei dem Endentwurf mehr videotechnische Details von entsprechend versierten Personen beurteilt werden sollen.

Zusätzlich können alle Personen gemäß ihrer Funktion automatisch über eine jeweilige Statusänderung informiert werden. Damit können alle Personen eingeladen werden, mit der Kommentierung zu beginnen oder über das Ende der Kommentierungsphase informiert werden. Auch können alle Personen über einen Projektstatus informiert werden, um entsprechende Arbeitskapazitäten für die Bearbeitung des Videos einplanen zu können. Vorteilhafterweise geschieht die Information durch eine E-Mail-Benachrichtigung, die automatisch aus der Datenbank generiert wird.

In weiterer Ausgestaltung der Erfindung können Videos/Videoentwürfe in verschiedenen Formaten, insbesondere in den Formaten MPG, AVI, MOV, WMV in die Datenbank eingepflegt werden. Es ist vorteilhaft, an dieser Stelle keine Beschränkung für die zu verwendenden Formate zu erzeugen, da es zwischen ihnen zum Teil funktionale Unterschiede gibt. Die Handhabung der Formate ist nicht Aufgabe der Datenbank und unterliegt im übrigen der fortlaufenden technischen Entwicklung. Die Formate MPG, AVI, MOV, WMV stellen eine Auswahl der heutzutage gebräuchlichsten Videoformate dar.

Auch können die in die Datenbank eingepflegten Videos/Videoentwürfe in einem Videokonverter in der Auflösung reduziert und in der Datenbank gespeichert werden. Abhängig von den technischen Daten des Videoentwurfs kann es sinnvoll sein, eine derartige Konvertierung durchzuführen, um die Verarbeitungsgeschwindigkeit zu verbessern oder den Speicheraufwand in der Datenbank zu verringern. Da Computermonitore nur eine beschränkte Auflösung haben und insbesondere übliche Fernsehsignale immer noch mit einer sehr geringen Auflösung arbeiten, kann beispielsweise für die Kommentierung kein Vorteil durch die maximale Auflösung erreicht werden. Ein Video mit reduzierter Auflösung kann auch als Vorschauvideo benutzt werden, um zum Beispiel die Auswahl des zu kommentierenden Videos zu ermöglichen.

Des weiteren können in die Datenbank eingepflegte Videos/Videoentwürfe in dem Videokonverter in ein anderes Format, insbesondere das Flash-Video-Format (FLV) konvertiert werden. Damit steht ein einheitliches Videoformat zur Verfügung, so dass ebenfalls ein einheitliches wiedergabetool verwendet werden kann. So können einerseits beliebige Videos als Entwürfe für die Bearbeitung verwendet werden, während andererseits sichergestellt ist, dass die Betrachtung und/oder Kommentierung immer mit dem gleichen Tool durchgeführt werden kann.

In weiterer Ausgestaltung der Erfindung können von in die Datenbank eingepflegten Videos/Videoentwürfen in dem Videokonverter Vorschaubilder erzeugt werden. Diese Vorschaubilder können benutzt werden, um verschiedene Projekte oder Versionen eines Videoentwurfs innerhalb eines bestimmten Projekts zu identifizieren. Da die Personen in verschiedenen Projekten mitarbeiten und einem Projekt verschiedene Videoentwürfe zugeordnet sein können, kann bereits über das Vorschaubild eine Auswahl für die Bearbeitung/Kommentierung getroffen werden kann. In dem Videokonverter kann der Inhalt des Videoentwurfs analysiert und das Vorschaubild mit einem ersten aussagekräftigen Inhalt erzeugt werden. Da viele Videos mit einem schwarzen Anfangsbildschirm starten ist anhand dieser Bilder keine Unterscheidung der Videoentwürfe möglich. Sequenzen, die einen aussagekräftigen Inhalt enthalten, können jedoch sehr leicht zur Unterscheidung von Videoentwürfen herangezogen werden.

Um das gleichzeitige Arbeiten von mehreren Personen auf der Datenbank zu ermöglichen, kann die Datenbank auf einem Server eingerichtet sein und die Kommentierung über einen mit dem Server verbundenen Client durchgeführt werden. Dabei kann der Server mit dem Client über das Internet verbunden sein. Die Verbindung über das Internet ist heutzutage sehr weit verbreitet und kann über verschiedenste Übertragungsarten bereitgestellt werden. Dies stellt nicht nur einen flexiblen Bearbeitungsort sicher, sondern ermöglicht aufgrund der plattformunabhängigen Implementierung die Verwendung von unterschiedlichsten Clients, so dass größtmöglichste Flexibilität erreicht wird. So können theoretisch beliebig viele Clients gleichzeitig mit dem Server verbunden sein und darauf zugreifen.

Vorteilhafterweise kann die Internetverbindung zwischen dem Server und dem wenigstens einen Client verschlüsselt sein. Damit kann die Sicherheit der in der Datenbank gespeicherten Daten gewährleistet bleiben, ohne dass die Nutzung der Daten unnötig eingeschränkt wird.

Insbesondere kann auch das User-Interface für das Kommentieren in einem Webbrowser bereitgestellt werden. Webbrowser sind auf jedem Rechner mit einer Internetverbindung vorhanden und können aufgrund der hohen Kompatibilität zu einander und zu den verwendeten Übertragungsprotokollen als plattformunabhängiges Medium für die Bearbeitung genutzt werden. Auch stellen Webbrowser ausreichend Möglichkeiten zur Verfügung, um eine Kommentierung eines Videos durchzuführen. Dahingegen würde die Installation einer properitären Applikation als Userinterface einen großen Aufwand für die Personen bedeuten. Teilweise ist dies auch gar nicht möglich aufgrund von Nutzungseinschränkungen durch einen Administrator oder teilweise fehlenden Kenntnissen der Personen.

In weiterer Ausgestaltung der Erfindung können die Videos in dem User-Interface von einem Flashplayer wiedergegeben werden. Der Flashplayer stellt ein einheitliches Wiedergabemedium dar, das insbesondere auch für die Wiedergabe von Videos im Format Flash-Video geeignet ist. Gleichzeitig erlauben die Merkmale von Flash eine besonders einfache Umsetzung der Kommentierung von Videos.

Auch können in dem User-Interface die Kommentierungsmöglichkeiten abhängig von dem Kommentierungsstatus und/oder der Funktion modifiziert werden. Damit kann das User-Interface dahingehend optimiert werden, dass eine Person nicht mit deaktivierten Funktionen irritiert wird, sondern nur die ihr aktuell zugeordneten Bearbeitungsmöglichkeiten durchführen kann. Dadurch kann das User-Interface übersichtlich gestaltet werden, da in den meisten Fällen nicht alle Bearbeitungsmöglichkeiten angeboten werden müssen.

Des weiteren können Kommentare im XML-Code in der Datenbank gespeichert werden. XML stellt einfache und abstrakte Darstellungsmöglichkeit zur Verfügung, die deshalb besonders für die Verwendung in Internetbrowsern geeignet ist.

Schließlich kann der Videoentwurf nach der finalen Kommentierung an einen Arbeitsprozess übergeben werden, in dem der Videoentwurf gemäß der Kommentare bearbeitet wird. In diesem finalen Arbeitsprozess findet die eigentliche Bearbeitung des Videos statt, wofür die vorangegangene finale Kommentierung jedoch die Voraussetzung ist. Durch die detaillierte und exakte Kommentierung wird sichergestellt, dass in dem Arbeitsprozess die Bearbeitung schnell und effizient durchgeführt werden kann.

Hinsichtlich weiterer vorteilhafter Ausgestaltungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt:
- Figur 1: das schematische Vorgehen zur Bearbeitung eines Videos, und
- Figur 2: die schematische Darstellung eines Systems zur Umsetzung des Verfahrens.

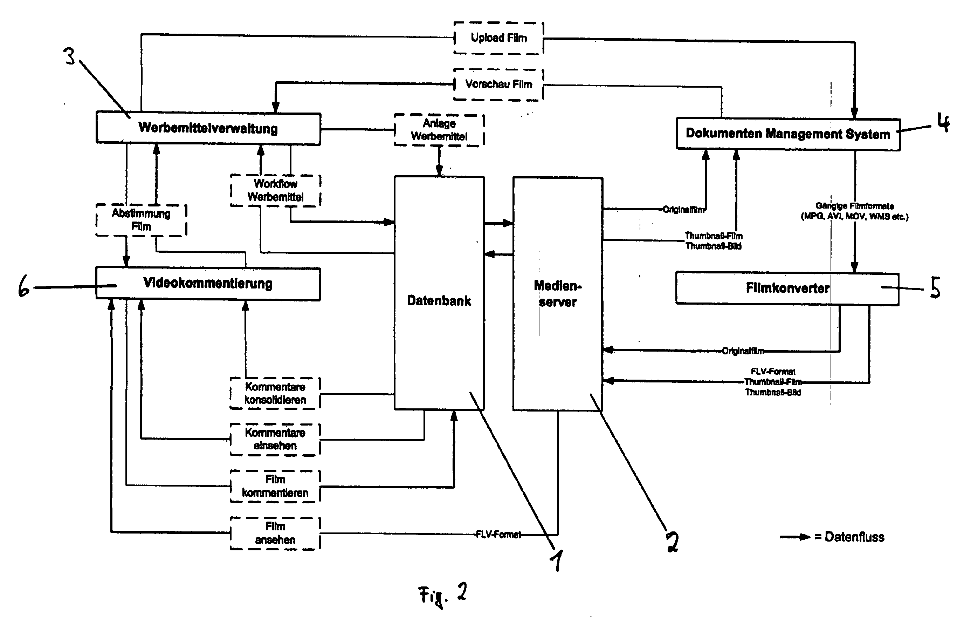

In der Figur 2 ist ein erfindungsgemäßes System dargestellt, mit dem das Verfahren für die Bearbeitung eines Videos durchgeführt werden kann. Dieses System umfasst eine zentrale Dankbank 1, an die ein Medienserver 2 angeschlossen ist. Ein Client führt die Werbemittelverwaltung 3 aus und ist mit der Datenbank 1 verbunden. Die Datenbank 1 ist auf einem zentralen Server abgelegt, und die Werbemittelverwaltung 3 kann prinzipiell auf verschiedenen Clients implementiert sein. Damit können die Daten für verschiedene Projekte in der selben Datenbank 1 gespeichert werden und es ist ein gleichzeitiger Zugriff auf diesen Server über verschiedene Clients möglich. Ein Arbeiten an verschiedenen Standorten unabhängig von speziell installierter Software ist damit möglich.

Zwischen die Werbemittelverwaltung 3 und den Medienserver 2 ist ein Dokumentenmanagementsystem (DMS) 4 geschaltet, das in beiden Richtungen Dokumente zur Verfügung stellt. Weiter ist ein Videokonverter 5 zwischen Dokumentenmanagementsystem 4 und Medienserver 2 geschaltet, der von dem Dokumentenmanagementsystem 4 Videos entgegennimmt und dieses zusammen mit konvertierten Videos ausgibt. Das Dokumentenmanagementsystem 4 und der Videokonverter 5 sind ebenfalls über Netzwerkverbindungen miteinander und mit der Werbemittelverwaltung 3 und dem Medienserver 2 verbunden, wobei die Verbindung hier ebenfalls als sichere Internetverbindung ausgeführt ist. Dokumentenmanagementsystem 4 und Videokonverter 5 können physikalisch auf dem Medienserver 2 oder auf eigenständigen Systemen ausgeführt sein.

Eine Videokommentierung 6 ist ebenfalls über eine gesicherte Internetverbindung mit der Werbemittelverwaltung 3, der Datenbank 1 und dem Medienserver 2 verbunden, und wird als Applikation in einem Internetbrowser auf einem beliebigen Client ausgeführt. Die Übertragung zwischen Medienserver 2 und Videokommentierung 6 erfolgt ausschließlich von dem Medienserver 2 zu der Videokommentierung 6 und die Verbindungen der Videokommentierung 6 mit der Werbemittelverwaltung 3 und der Datenbank 1 sind bidirektional. Die Videokommentierung 6 läuft als Flash-Application in einem beliebigen Webbrowser und ist über eine Internetverbindung mit der Datenbank 1 verbunden. Die Verbindung ist verschlüsselt, so dass nur mit einer entsprechenden Autorisierung auf die Server Zugriff möglich ist.

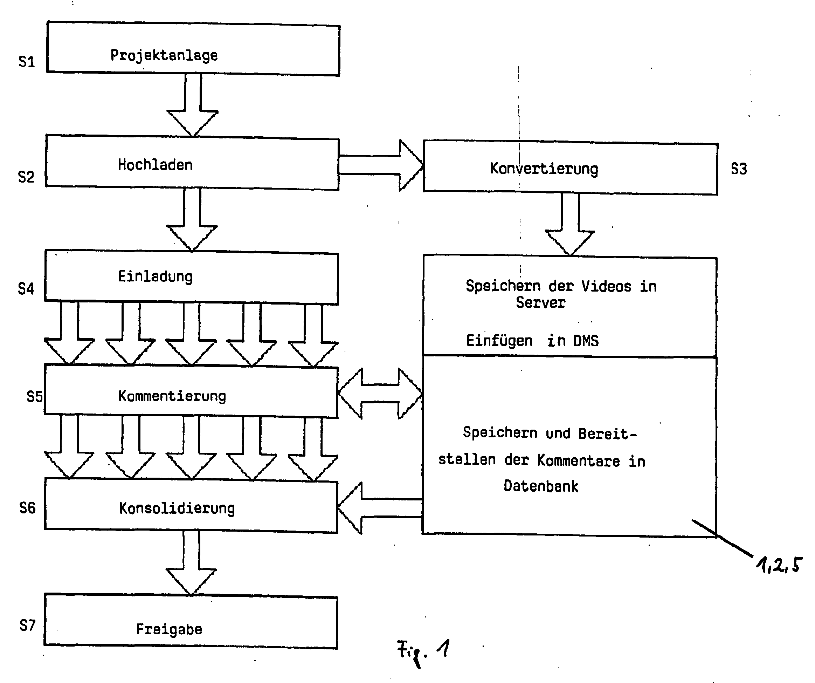

Wenn mit dem System ein Video, das in diesem Fall ein Werbemittel ist, bearbeitet werden soll, wird zunächst ein Projekt in dem Schritt S1 angelegt, wie in Figur 1 gezeigt ist. Hierzu wird von einem Projektleiter in einer Werbemittelverwaltung 3 das Projekt definiert, wozu auch die Definition von einem Projektstatus und einem Kommentierungsstatus gehören. Diese Statusinformationen sind in der Datenbank 2 abgelegt, so dass ständig darauf zugegriffen werden kann, und bilden einen Teil des Workflows zwischen der Werbemittelverwaltung 3 und der Datenbank 1. Der Workflow betrifft darüber hinaus den gesamten Datenaustausch zwischen der Werbemittelverwaltung 3 und der Datenbank 1. Die Statusinformationen werden initial auf einen Anfangswert gesetzt, und eine Änderung dieser Informationen löst im System automatische Vorgänge aus, die später im Detail beschrieben werden. Außerdem werden initial Listen von Personen definiert, die Funktionen in diesem Projekt übernehmen. Einzelne Funktionen werden im Weiteren erläutert, sobald sie relevant für den Fortschritt des Projekts sind. Alle diese Informationen werden in einer Datenbank 1 initial bei der Anlage des Werbemittels gespeichert.

Im nächsten Schritt S2 wird ein Video als Werbemittel in das System hochgeladen. Die Werbemittelverwaltung 3 stellt das User-Interface zur Verfügung, mit dem das Video zunächst in das Dokumentenmanagementsystem 4 geladen wird. In dem Dokumentenmanagementsystem 4 findet in dem Videokonverter 5 in einem Schritt S3 eine Konvertierung statt. Da das Dokumentenmanagmentsystem 4 zunächst alle verfügbaren Filmformate, wie zum Beispiel MPG, AVI, MOV, WMV ohne Einschränkungen annimmt, werden in dem Videokonverter 5 die verschiedenen innerhalb des Systems verwendeten Formate erzeugt. Hierbei handelt es sich um das Originalvideo im Flash-Videoformat (FLV), ein Thumbnail-Video mit einer reduzierten Auflösung und ein Thumbnail-Bild.

In dem Dokumentenmanagementsystem 4 werden alle zu einem Projekt gehörenden Dateien und damit auch die Videoentwürfe erfasst, wobei das Dokumentenmanagementsystem 4 das einzige Interface für Videoentwürfe zu dem System darstellt. Das Hochladen der Videoentwürfe wird dabei üblicherweise von einer Person durchgeführt, die für die Erstellung des Videoentwurfs verantwortlich ist. Diese Funktion unterscheidet sich prinzipiell von der inhaltlichen Bearbeitung eines Videos, so dass bereits hier eine Trennung von Funktionen erfolgt. Das Originalvideo wird zusammen mit den drei zusätzlich generierten Dateien an den Medienserver 2 übergeben und dort abgespeichert. Der Medienserver 2 stellt funktional einen Teil der Datenbank 1 dar und ist lediglich aus Gründen der Performance des Gesamtsystems als eigenständiger Server ausgelagert.

Der Medienserver 2 liefert an das Dokumentenmanagementsystem 4 das Originalvideo und die konvertierten Formate, welches die Dateien erfasst und logisch miteinander verbindet. Thumbnail-Video und Thumbnail-Bild werden von dem Dokumentenmanagementsystem 4 der Werbemittelverwaltung 3 zur Verfügung gestellt. Dort dienen sie als Auswahlhilfe dem erleichterten zugriff auf die entsprechenden Videoentwürfe oder Projekte.

In der Werbemittelverwaltung 3 wird der gesamte weitere Prozess zur Kommentierung verwaltet und gesteuert. Hier wird von dem Projektleiter der Projektstatus und der Kommentierungsstatus geändert, was z.B. explizit von dem Projektleiter oder über definierte zeitintervalle durchgeführt werden kann.

Der Projektstatus wird im globalen Rahmen gesetzt, wenn ein gewisser Fortschritt erreicht ist. Hierbei können auch zeitliche Einflüsse zu berücksichtigen sein. Der Kommentierungsstatus betrifft jeweils einen Videoentwurf und spiegelt die Bearbeitungsphasen des Videoentwurfs wieder. Auch dieser Status kann entweder explizit gesetzt werden oder nach Ablauf eines vorgegebenen Zeitraums automatisch modifiziert werden.

Sobald der Kommentierungstatus entsprechend gesetzt ist, wird die Kommentierung gestartet und in einem Schritt S4 die Personen via E-Mail zur Kommentierung des Videos eingeladen. Dazu wird aus der Werbemittelverwaltung 3 die Liste der entsprechenden Personen aus der Datenbank 1 abgerufen und an eine ebenfalls dort hinterlegte korrespondierende E-Mailadresse eine Nachricht verschickt. Die Liste der eingeladenen Personen hängt von Projekt- und Kommentierungsstatus ab. Gemäß Projektfortschritt sind für die Beurteilung inhaltlicher oder technischer Fragen verschiedene Personen mit ihren unterschiedlichen Funktionen z.B. als technische oder inhaltliche Kommentatoren erforderlich, um die Kommentierung durchzuführen. Auch die Kommentierung eines Einzelentwurfs kann mehrphasig durchgeführt werden, so dass über den Kommentierungsstatus entsprechend unterschiedliche Listen abgerufen werden können.

In einem Schritt S5 wird die Kommentierung des Videos durchgeführt. Verschiedenen Personen sind dabei unterschiedliche Funktionen zugeordnet. Sie können nur passiv teilnehmen und das Video betrachten oder das Video betrachten und unterschiedlich kommentieren. Eine Funktion kann auch beinhalten, Kommentare zu verändern. Dazu wird in einer Videokommentierung 6 zunächst die Wiedergabe des Videos ermöglicht.

Die Wiedergabe des Videoentwurfs ist als Teils eines User-Interfaces der Videokommentierung 6 vorgesehen, das in einem Internetbrowser zur Verfügung gestellt wird. Als einheitliches Videoformat ist das Flash-Videoformat (FLV) verwendet, weshalb für die Wiedergabe der Flash-Videoplayer eingesetzt wird. Der Medienserver 2 stellt das Video direkt der Videokommentierung 6 zur Verfügung. In diesem User-Interface ist neben der Wiedergabe des Videos mit entsprechenden Steuerungsmöglichkeiten, z.B. Start, Pause, schneller Vorlauf, schneller Rücklauf und ähnlichem, auch die Darstellung von Informationen über das Video, wie zum Beispiel Laufzeit, Auflösung, Format oder ähnliches vorgesehen. Darüber hinaus werden in dem User-Interface alle zur Zeit aktiven Benutzer angezeigt, die in der Videokommentierung 6 arbeiten.

Wesentlich für das User-Interface sind verschiedene Möglichkeiten zur Kommentierung. Als Kommentarmöglichkeiten können inhaltliche Kommentare als Text, Audio- oder Video-file hinzugeführt werden, oder es können graphische Elemente innerhalb des Videoentwurfs platziert werden. Die graphischen Elemente können z.B. vordefinierte Formen wie Pfeile, Kreise, Linien oder Quadrate sein, die in verschiedenen Farben dargestellt werden können, um z.B. einen Kontrast in dem Videoentwurf zu erzeugen. Diese Kommentare können mit einzelnen Bildern aus dem Videoentwurf verbunden werden, oder auch eine Sequenz aus dem Videoentwurf betreffen. Dabei ist es auch möglich, dass sich die graphischen Elemente während einer derartigen Sequenz innerhalb des Entwurfs bewegen und nicht nur statisch an einer Position vorgesehen sind. Ein erstellter Kommentar wird direkt aus der Videokommentierung 6 an die Datenbank 1 übertragen, so dass er über die Datenbank 2 direkt für andere Personen zur Verfügung gestellt werden kann. Die Bearbeitungsmöglichkeiten sind an die jeweiligen Funktionen der Person und den Kommentierungen und Projektstatus angepasst, um den Personen jeweils nur die notwendigen Mittel zur Verfügung zu stellen. Inhaltliche Kommentare können leicht als Text hinzugefügt werden, wohingegen technische Kommentare oft die Platzierung von Markierungen im Video erfordern.

Zusätzlich können in dem User-Interface bereits vorhandene Kommentare angezeigt werden. Diese Möglichkeit gemäß der Funktion auf eigene Kommentare beschränkt sein, um eine Beeinflussung durch Kommentare anderer Personen auszuschließen. Es kann außerdem auch die Möglichkeit bestehen, dass ein Nutzer auch die Kommentare anderer Nutzer einsehen und bearbeiten kann.

Über eine Kommentarliste ist es möglich, direkt auf einzelne Kommentare zuzugreifen, wobei bei der Auswahl eines Kommentars dann auch direkt das entsprechende Bild oder die entsprechende Sequenz des Videoentwurfs angezeigt wird.

Von der Datenbank 1 werden gemäß der Funktion der Person die Kommentare und weitere Informationen, wie z.B. über alle derzeit aktiven Personen an die Videokommentierung 6 übertragen, so dass diese Informationen dort dargestellt werden können. Durch die Verwendung der Clients für die Videokommentierung 6 können theoretisch beliebig viele Personen gleichzeitig an der Kommentierung arbeiten.

Die Kommentare selbst werden als XML-Code gespeichert, was als standardisiertes Format besonders leicht zu handhaben ist. Jeder Kommentar wird, sobald er erstellt wurde, in diesem Format individuell von der Videokommentierung 6 an die Datenbank 1 übertragen und dort abgelegt. Eine Aktualisierung der Kommentarlisten, die in der Videokommentierung 6 auf verschiedenen Clients angezeigt werden, kann dadurch direkt erfolgen von der Datenbank 1, ohne dass eine Person ihre Kommentierung zunächst abgeschlossen haben muss.

In dem Schritt S6 findet die Konsolidierung der Kommentare statt. Diese Funktion wird üblicherweise von dem verantwortlichen Projektleiter durchgeführt, kann aber prinzipiell auch jeder anderen Person zugeordnet werden. Zunächst wird in der Werbemittelverwaltung 3 der Kommentierungsstatus angepasst, damit das weitere Hinzufügen oder Bearbeiten von Kommentaren durch Personen mit Kommentierungsfunktion nicht weiter möglich ist. So wird eine stabile Basis für die weitere Bearbeitung der Kommentare geschaffen. Die involvierten Personen werden via E-Mail über die Statusänderung informiert. Dies betrifft einerseits Personen, die die Kommentierung durchgeführt haben und informiert werden, dass die Kommentierung beendet ist, wie auch die Personen, welche die Konsolidierung durchzuführen hat und mit der E-Mail zur Konsolidierung eingeladen werden. Die Konsolidierung geschieht ebenfalls über das User-Interface der Videokommentierung 6 durch die Person(en) mit der entsprechenden Funktion. Diese Person hat Zugriff auf alle Kommentare aus der Datenbank 1. Auch eine Mehrzahl von Personen kann diese Funktion wahrnehmen. Der Zugriff erfolgt wie bereits beschrieben über die Kommentarliste.

Nach Abschluss der Konsolidierung S6 wird der Kommentierungsstatus wiederum angepasst, so dass eine weitere Konsolidierung nicht mehr stattfinden kann und es erfolgt erneut eine entsprechende Benachrichtigung an die involvierten Personen. Im anschließenden Schritt S7 wird das Video mit den konsolidierten Kommentaren über die Werbemittelverwaltung 3 freigegeben und die weitere Bearbeitung kann wenn erforderlich entsprechend der Kommentare durchgeführt werden. Soweit eine weitere Bearbeitung des Videos notwendig ist, kann das überarbeitete Video in dem Schritt S2 erneut in die Werbemittelverwaltung 3 hochgeladen werden. Das Video dient dann als Videoentwurf in einer neuen Version. Auch hier wird wieder eine Kommentierung durchgeführt, bis eine finale Version des Videos erreicht wird. Dabei durchläuft das Projekt verschiedene Projektphasen, die beispielsweise mit dem Hochladen von neuen Videoentwürfen gesetzt werden können. Jedoch sind die Projektphasen nicht auf dieses Vorgehen beschränkt.

## Patentansprüche

1. Verfahren zur Bearbeitung eines Videos, insbesondere eines Videos als Werbemittel, bei dem ein Videoentwurf elektronisch erzeugt wird und dem Videoentwurf elektronisch Kommentare beispielsweise als Text, Sprache, Bild oder Video zu einzelnen Bildern oder Bildsequenzen oder als bewegte oder statische Markierungen in Bildern oder Bildsequenzen für eine Bearbeitung des Videoentwurfs hinzugefügt werden, wobei
- in einer Datenbank (1, 2) ein Projekt erzeugt wird,
- der Videoentwurf dem Projekt zugeordnet wird,
- dem Videoentwurf einzelne Kommentare hinzugefügt und die Kommentare in der Datenbank (1, 2) gespeichert werden,
- einzelne Kommentare aus der Gesamtheit der Kommentare zu einer finalen Kommentierung ausgewählt und bearbeitet werden, und
- der Videoentwurf mit der finalen Kommentierung zu dem Video fertiggestellt wird,
**dadurch gekennzeichnet, dass**
- in dem Projekt verschiedene Versionen des Videoentwurfs gespeichert werden und jede Version des Videoentwurfs separat kommentiert wird.

2. Verfahren nach Anspruch 1, **dadurch gekennzeichnet, dass** ein fertiges Video einer Version als Videoentwurf in einer folgenden Version des Projekts verwendet wird.

3. Verfahren nach einem der Ansprüche 1 oder 2, **dadurch gekennzeichnet, dass** verschiedene Versionen zusammengefasst und Arbeitsphasen zugeordnet werden.

4. Verfahren nach einem der vorhergehenden Ansprüche, **dadurch gekennzeichnet, dass** die Kommentare unmittelbar nach ihrer Erstellung in der Datenbank (1, 2) gespeichert werden.

5. Verfahren nach einem der vorhergehenden Ansprüche, **dadurch gekennzeichnet, dass** jedem Projekt ein Projektstatus zugeordnet und in der Datenbank (1, 2) gespeichert ist, wobei der Projektstatus die Arbeitsphasen abbildet.

6. Verfahren nach einem der vorhergehenden Ansprüche, **dadurch gekennzeichnet, dass** jeder Videoentwurf in Kommentierungsphasen kommentiert wird und jedem Videoentwurf ein Kommentierungsstatus zugeordnet und in der Datenbank (1, 2) gespeichert wird, wobei der Kommentierungsstatus die jeweilige Kommentierungsphase abbildet.

7. Verfahren nach einem der vorhergehenden Ansprüche, **dadurch gekennzeichnet, dass** eine Mehrzahl von Personen individuelle Kommentare in den Videoentwurf einfügt.

8. Verfahren nach Anspruch 7, **dadurch gekennzeichnet, dass** einzelnen Personen jeweils wenigstens eine Funktion für die Kommentierung des Videoentwurfs zugeordnet ist, wobei einer Funktion die finale Kommentierung zugeordnet ist.

9. Verfahren nach Anspruch 8, **dadurch gekennzeichnet, dass** den verschiedenen Funktionen unterschiedliche Bearbeitungsrechte bei der Kommentierung zugeordnet werden.

10. Verfahren nach Anspruch 9, **dadurch gekennzeichnet, dass** die Funktion für ein Projekt, eine Arbeitsphase und/oder für eine Version individuell vergeben und in der Datenbank (1, 2) gespeichert wird.

11. Verfahren nach Anspruch 6 und Anspruch 9, **dadurch gekennzeichnet, dass** alle Personen gemäß ihrer Funktion automatisch über eine jeweilige Statusänderung informiert werden.

12. Verfahren nach einem der vorhergehenden Ansprüche, **dadurch gekennzeichnet, dass** Videos/Videoentwürfe in verschiedenen Formaten, insbesondere in den Formaten MPG, AVI, MOV, WMV in die Datenbank (1, 2) eingepflegt werden.

13. Verfahren nach einem der vorhergehenden Ansprüche, **dadurch gekennzeichnet, dass** in die Datenbank (1, 2) eingepflegte Videos/Videoentwürfe in einem Videokonverter (5) in der Auflösung reduziert und in der Datenbank (1, 2) gespeichert werden.

14. Verfahren nach einem der vorhergehenden Ansprüche, **dadurch gekennzeichnet, dass** in die Datenbank (1, 2) eingepflegte Videos/Videoentwürfe in dem Videokonverter (5) in ein anderes Format, insbesondere das Flash Videoformat (FLV) konvertiert werden.

15. Verfahren nach einem der vorhergehenden Ansprüche, **dadurch gekennzeichnet, dass** von in die Datenbank (1, 2) eingepflegten Videos/Videoentwürfen in dem Videokonverter (5) Vorschaubilder erzeugt werden.

16. Verfahren nach Anspruch 15, **dadurch gekennzeichnet, dass** in dem Videokonverter (5) der Inhalt des Videos/Videoentwurfs analysiert und das Vorschaubild mit einem ersten aussagekräftigen Inhalt erzeugt wird.

17. Verfahren nach einem der vorhergehenden Ansprüche, **dadurch gekennzeichnet, dass** die Datenbank (1, 2) auf einem Server eingerichtet ist und die Kommentierung über einem mit dem Server verbundenen Client durchgeführt wird.

18. Verfahren nach Anspruch 17, **dadurch gekennzeichnet, dass** der Server mit dem Client über das Internet verbunden ist.

19. Verfahren nach Anspruch 18, **dadurch gekennzeichnet, dass** die Internet-Verbindung zwischen dem Server und dem Client verschlüsselt ist.

20. Verfahren nach einem der vorhergehenden Ansprüche, **dadurch gekennzeichnet, dass** ein User Interface für das Kommentieren in einem Webbrowser bereitgestellt wird.

21. Verfahren nach Anspruch 20, **dadurch gekennzeichnet, dass** die Videos/Videoentwürfe in dem User Interface von einem Flash Player wiedergegeben werden.

22. Verfahren nach Anspruch 10 und einem der Ansprüche 20 oder 21, **dadurch gekennzeichnet, dass** in dem User Interface die Kommentierungsmöglichkeiten abhängig von dem Kommentierungsstatus modifiziert werden.

23. Verfahren nach einem der Ansprüche 20 bis 22, **dadurch gekennzeichnet, dass** in dem User Interface die Kommentierungsmöglichkeiten abhängig von der Funktion modifiziert werden.

24. Verfahren nach einem der vorhergehenden Ansprüche, **dadurch gekennzeichnet, dass** Kommentare im XML-Code in der Datenbank (1, 2) gespeichert werden.

25. Verfahren nach einem der vorhergehenden Ansprüche, **dadurch gekennzeichnet, dass** der Videoentwurf nach der finalen Kommentierung an einen Arbeitsprozess übergeben wird, in dem der Videoentwurf gemäß der Kommentare bearbeitet wird.

## Claims

1. A method for processing a video, in particular a video as publicity material, wherein a video outline is produced electronically and comments are added electronically for example as text, speech, image or video to individual images or image sequences or as movable or static indications in images or sequences of images to the video outline in order to process the video outline,
- a project being generated in a database (1, 2),
- the video outline being assigned to the project,
- individual comments being added to the video outline and the comments being stored in the database (1, 2),
- individual comments being selected from the entirety of the comments for a final commentary and being processed, and
- the video outline being completed with the final commentary for the video,
**characterised in that**
- different versions of the video outline are stored in the project, and each version of the video outline is commented separately.

2. The method according to Claim 1, **characterised in that** a finished video of one version as a video outline is used in a following version of the project.

3. The method according to any of Claims 1 or 2, **characterised in that** different versions are combined and working phases are assigned.

4. The method according to any of the preceding claims, **characterised in that** the comments are stored in the database (1, 2) immediately after being produced.

5. The method according to any of the preceding claims, **characterised in that** a project status is assigned to every project and is stored in the database (1, 2), the project status indicating the working phases.

6. The method according to any of the preceding claims, **characterised in that** every video outline is commented in commentary phases, and a commenting status is assigned to every video outline and is stored in the database (1, 2), the commentary status indicating the respective commentary phase.

7. The method according to any of the preceding claims, **characterised in that** a number of people add individual comments to the video outline.

8. The method according to Claim 7, **characterised in that** at least one function for the commentary of the video outline is assigned to individual people, the final commentary being assigned to one function.

9. The method according to Claim 8, **characterised in that** different processing rights for the commentary are assigned to the different functions.

10. The method according to Claim 9, **characterised in that** the function for a project, a working phase and/or for a version is individually assigned and stored in the database (1, 2).

11. The method according to Claim 6 and Claim 9, **characterised in that** all people, depending on their function, are automatically informed of a respective change of status.

12. The method according to any of the preceding claims, **characterised in that** videos/video outlines are added to the database (1, 2) in different formats, in particular in the MPG, AVI, MOV, WMV formats.

13. The method according to any of the preceding claims, **characterised in that** videos/video outlines added to the database (1, 2) have their resolution reduced in a video converter (5) and are stored in the database (1, 2).

14. The method according to any of the preceding claims, **characterised in that** videos/video outlines added to the database (1, 2) are converted into a different format, in particular the Flash Video Format (FLV) in the video converter (5).

15. The method according to any of the preceding claims, **characterised in that** preview images are produced from videos/video outlines added to the database (1, 2) in the video converter (5).

16. The method according to Claim 15, **characterised in that** the content of the video/video outline is analysed in the video converter (5) and the preview image is produced with a first significant content.

17. The method according to any of the preceding claims, **characterised in that** the database (1, 2) is set up on a server, and the commentary is given by a client associated with the server.

18. The method according to Claim 17, **characterised in that** the server is connected to the client via the Internet.

19. The method according to Claim 18, **characterised in that** the Internet connection between the server and the client is encrypted.

20. The method according to any of the preceding claims, **characterised in that** a user interface is provided for the commentary in a web browser.

21. The method according to Claim 20, **characterised in that** the videos/video outlines are reproduced in the user interface by a Flash Player.

22. The method according to Claim 10 and either of Claims 20 or 21, **characterised in that** the commentary possibilities in the user interface are modified dependently upon the commentary status.

23. The method according to any of Claims 20 to 22, **characterised in that** the commentary possibilities are modified in the user interface depending on the function.

24. The method according to any of the preceding claims, **characterised in that** comments in XML code are stored in the database (1, 2).

25. The method according to any of the preceding claims, **characterised in that** after the final commentary, the video outline is passed on to a working process in which the video outline is processed according to the comments.

## Revendications

1. Procédé pour éditer une vidéo, particulièrement une vidéo de publicité, qui permet de créer un concept vidéo électroniquement et d'ajouter des commentaires électroniques au concept vidéo, par exemple sous forme de texte, voix, image ou vidéo pour accompagner des images individuelles ou des séquences d'images , ou sous forme de marquage statique ou mobile dans des images ou des séquences d'images, en vue d'éditer le concept vidéo, pour lequel
- un projet est créé dans une banque de données (1, 2),
- le concept vidéo est assigné au projet,
- des commentaires individuels sont ajoutés au concept vidéo et les commentaires sont sauvegardés dans la banque de donnée (1, 2),
- des commentaires individuels en provenance de la totalité des commentaires sont sélectionnés et édités en vue du commentaire final, et
- le concept vidéo est achevé avec les commentaires finaux,
**caractérisé en ce que**
- les différentes versions du concept vidéo sont sauvegardées dans le projet et chaque version du concept vidéo est commentée séparément.

2. Procédé selon la revendication 1, **caractérisé en ce qu'**un vidéo achevé d'une version est utilisé dans une version suivante du projet.

3. Procédé selon l'une des revendications 1 ou 2, **caractérisé en ce que** différentes versions abrégée et étapes de travail sont classées.

4. Procédé selon l'une des revendications précédentes, **caractérisé en ce que** les commentaires sont sauvegardés dans la banque de données (1, 2) immédiatement après leur création.

5. Procédé selon l'une des revendications précédentes, **caractérisé en ce qu'**un statut de projet est assigné à un projet et sauvegardé dans la banque de données (1, 2), le statut de projet représentant les étapes de travail.

6. Procédé selon l'une des revendications précédentes, **caractérisé en ce que** chaque concept vidéo est commenté dans des étapes de commentaire et un statut de commentaire est assigné à chaque concept vidéo puis sauvegardé dans la banque de données (1, 2), le statut de commentaire représentant l'étape de commentaire correspondante.

7. Procédé selon l'une des revendications précédentes, **caractérisé en ce que** plusieurs personnes peuvent ajouter des commentaires individuels au concept vidéo.

8. Procédé selon la revendication 7, **caractérisé en ce qu'**au moins une fonction pour le commentaire du concept vidéo est assigné par personne, le commentaire final était assigné à une fonction.

9. Procédé selon la revendication 8, **caractérisé en ce que** différents droits de modification sont assignés aux fonctions différentes lors du commentaire.

10. Procédé selon la revendication 9, **caractérisé en ce que** la fonction est attribuée individuellement pour un projet, une étape de travail ou une version et sauvegardée dans la banque de données (1, 2).

11. Procédé selon la revendication 6 et 9, **caractérisé en ce que** toute personne est automatiquement informée d'un changement de statut respectif selon sa fonction.

12. Procédé selon l'une des revendications suivantes, **caractérisé en ce que** les vidéos/concepts vidéo sont conservés sous différents formats, particulièrement les formats MPG, AVI, MOV, WMV, dans la banque de données (1, 2).

13. Procédé selon l'une des revendications précédentes, **caractérisé en ce que** les vidéos/concepts vidéo conservés dans la banque de données (1, 2) sont réduits par un convertisseur vidéo (5) dans la dissolution et sauvegardés dans la banque de données (1, 2).

14. Procédé selon l'une des revendications précédentes, **caractérisé en ce que** les vidéos/concepts vidéo conservés dans la banque de données (1, 2) sont convertis dans un autre format, particulièrement le format vidéo flash (FLV), par le convertisseur vidéo (5).

15. Procédé selon l'une des revendications précédentes, **caractérisé en ce que** des aperçus des vidéos/concepts vidéo conservés dans la banque de données (1, 2) apparaissent dans le convertisseur vidéo (5).

16. Procédé selon la revendication 15, **caractérisé en ce que** le contenu de la vidéo/concept vidéo est analysé dans le convertisseur vidéo (5) alors que l'image d'aperçu apparaît avec un premier contenu pertinent.

17. Procédé selon l'une des revendications précédentes, **caractérisé en ce que** la banque de données (1, 2) est érigée sur un serveur et le commentaire est effectué à travers un client relié au serveur.

18. Procédé selon la revendication 17, **caractérisé en ce que** le serveur est relié au client par internet.

19. Procédé selon la revendication 18, **caractérisé en ce que** la connexion internet entre le serveur et le client est cryptée.

20. Procédé selon l'une des revendications précédentes, **caractérisé en ce qu'**une interface d'utilisateur est mise en place dans un fureteur Web pour l'écriture de commentaires.

21. Procédé selon la revendication 20, **caractérisé en ce que** les vidéos/concepts vidéo sont lus par un lecteur flash contenu dans l'interface d'utilisateur.

22. Procédé selon la revendication 10 et l'une des revendications 20 ou 21, **caractérisé en ce que** les possibilités d'écriture de commentaires sont modifiées dans l'interface d'utilisateur selon le statut de commentaire.

23. Procédé selon l'une des revendications 20 à 22, **caractérisé en ce que** les possibilités d'écriture de commentaires sont modifiées dans l'interface d'utilisateur selon la fonction.

24. Procédé selon l'une des revendications précédentes, **caractérisé en ce que** les commentaires sont sauvegardés dans la banque de données (1, 2) sous forme de code XML.

25. Procédé selon l'une des revendications précédentes, **caractérisé en ce que** le concept vidéo est, après le commentaire final, transféré à un processus de travail pendant lequel le concept vidéo est édité selon les commentaires.
